# EUROPEAN PATENT APPLICATION

(11) **EP 4 503 066 A1**
(43) Date of publication of application: **05.02.2025**
(21) Application number: 23189249.8
(22) Date of filing: 02.08.2023
(51) Int. Cl.: H01F 3/14, H01F 27/28, H01F 30/12, H02M 3/00

(54) **MULTI-PHASE TRANSFORMER AND LLC RESONANT CONVERTER**

(71) Applicant: Delta Electronics (Thailand) Public Co., Ltd., Samutprakarn 10280 (TH)
(72) Inventor: REHLAENDER, Philipp, 33098 Paderborn (DE); LOPEZ CAÑON, Andres Mauricio, 33178 Borchen (DE); SCHAFMEISTER, Frank, 34414 Warburg (DE); BÖCKER, Joachim, 12347 Berlin (DE)
(74) Representative: Hoefer & Partner Patentanwälte mbB

(57) **Abstract**

The invention concerns a multi-phase transformer (1), comprising: at least one magnetic core component (2) comprising a body portion (3) and a plurality of leg portions (4) extending along a leg extension direction (5) from the body portion (3); a primary side with a plurality of primary conductors (6), wherein each of the primary conductors (6) is respectively wound around one leg portion (4); and a secondary side with a plurality of secondary conductors (7) respectively at least partially surrounding one leg portion (4), the secondary conductors (7) being interconnected in an electrical star configuration; wherein the primary conductors (6) and the secondary conductors (7) are stacked along the leg extension direction (5), and a star point (8) of the secondary side is disposed, at least geometrically, in a position within an imaginary boundary (9) defined by outer boundaries of the at least one magnetic core component (2) and/or of the primary conductors (6). The invention also concerns an LLC resonant converter (100) comprising said multi-phase transformer (1).

## Description

The invention concerns a multi-phase transformer and an LLC resonant converter comprising the multi-phase transformer.

Multi-phase transformers and converters comprising said transformers, especially three-phase transformers/converters, are commonly known, for example from US 2013/0201725 A1, US 2019/0013741 A1, and CN 101841244. Such transformers are commonly employed for high-current applications (i.e. several hundred ampere). However, they commonly have the drawback in that a secondary winding length is long. Further, a star or delta connection configuration of the secondary winding requires an extensively long connection, which increases the losses and adds a parasitic inductance which reduces a maximum available power transfer. Furthermore, a discrete resonant inductor is required therein, which increases the losses of the entire system.

Specifically, US 2013/0201725 A1 discloses in Fig. 4 thereof a transformer with primary windings in a delta-configuration and secondary windings connected in a star-configuration. Therein, the secondary windings comprise a secondary common node, which is the common point of the star-configured transformer, i.e. the common point of the star-configured secondary winding. Such a common point is also commonly referred to as "star point". However, US 2013/0201725 A1 is silent on geometrical and/or electrical positioning of the secondary common node. In real-world applications thereof, the winding lengths especially of the secondary side are long.

In general, especially for high-current transformers and their applications, secondary-side winding losses are dominant, since commonly only one secondary turn is employed. Furthermore, when providing multiple (according to number of phases) of such transformers side-by-side, the connection between secondary windings is very long such that winding losses increase significantly.

It is an object of the present invention to provide a multi-phase transformer and an LLC resonant converter which overcome the aforementioned challenges. In particular, it is an object of the present invention to provide a multi-phase transformer and an LLC resonant converter with reduced secondary winding lengths and further to circumvent the use of bulky and lossy resonant inductors, thereby reducing losses and increasing maximum available power transfer and efficiency.

These objects are achieved by the subject matter of the independent claim. The dependent claims contain advantageous embodiments of the present invention.

In particular, the solution of this object is achieved by a multi-phase transformer according to the following. The multi-phase transformer comprises at least one magnetic core component comprising a body portion and a plurality of leg portions extending along a leg extension direction from the body portion. Further, the transformer comprises a primary side with a plurality of primary conductors and a secondary side with a plurality of secondary conductors. Therein, each of the primary conductors is respectively wound around one leg portion. The secondary conductors respectively at least partially surround one leg portion and are interconnected in an electrical star configuration. The primary conductors and the secondary conductors are stacked along the leg extension direction. Further, a star point of the secondary side is disposed, at least geometrically, in a position within an imaginary boundary defined by outer boundaries of the at least one magnetic core component and/or the primary conductors.

Thereby, the secondary conductors form an integrated stray magnetic field within the transformer, which can be used to avoid bulky and lossy resonant inductors. Furthermore, the winding length, i.e. a length of conductors, especially on the secondary side is reduced significantly such that winding losses are advantageously reduced.

Preferably, the imaginary boundary is an imaginary plane or an imaginary volume defined by outer dimensions of the at least one magnetic component or the plurality of primary conductors. In other words, the imaginary boundary may be two-dimensional, i.e. a plane (for instance, a cross-section), or may be three-dimensional, i.e. a volume. In particular, the imaginary boundary is defined by the one or more aforementioned components of the transformer, apart from the secondary conductors, which define the outer dimensions of the transformer. For instance, if the transformer were placed on or against a plane surface, the one or more components (apart from the secondary conductors), especially the respective surfaces or points thereof, in contact with that surface would define the outer dimensions of the transformer. The star point of the secondary conductors is disposed at least geometrically within this imaginary volume or boundary.

Advantageously, the term "at least geometrically" is to be understood as characterizing especially the disposition in space of the star point. Additionally, this term may be understood as "geometrically and electrically", thereby characterizing disposition in space as well as electrical disposition, i.e. disposition with regard to electrical lengths.

In some advantageous embodiments, the position of the star point of the secondary conductors is, at least geometrically, a central position of the transformer between the leg portions. In particular, the central position is defined by a middle point of at least one imaginary line spanning a shortest distance between at least two separate leg portions of the at least one magnetic core component. For instance, if taking exactly two separate leg portions, the central position is defined as the middle point between these two leg portions. Further, if taking for instance three leg portions, a middle point is defined between a first and a second leg portion, another middle point is defined between the second leg portion and a third leg portion, and another middle point is defined between the first leg portion and the third leg portion. The central position is then a combined projection of the aforementioned middle points, for instance the center of a triangle defined by the three imaginary lines spanning between the three leg portions.

Preferably, the position of the star point is disposed within said imaginary boundary also with regard to the leg extension direction. For example, the star point is disposed within the imaginary boundary, without the imaginary boundary being linearly translated along the leg extension direction to outside of boundaries (in leg extension direction) of the at least one magnetic core component and/or the primary conductors. This preferably corresponds to the aforementioned three-dimensional imaginary boundary.

Preferably, the star point is disposed in the aforementioned central position within a margin of error. In other words, the positioning of the star point may have a margin of error. The margin of error may be defined as 20 %, preferably 10 %, more preferably 5 % or 2% or less, of the distance between the leg portions, i.e. the length of the aforementioned one or more imaginary lines. The margin of error is preferably one of the aforementioned percent values added or subtracted from the theoretical (perfect) central position, along the aforementioned line spanning the shortest distance, towards one of the leg portions.

In some preferable embodiments, the secondary side comprises at least one plate, wherein portions of the plate respectively define the secondary conductors. In other words, one (of the at least one) plate defines a plurality of secondary conductors. The dimensions of the plates in their respective length and width are substantially greater than their thickness.

Alternatively, the "plurality of secondary conductors" may also be referred to as "plurality of secondary conductor portions", especially when referring to portions of a single electrical conductor, for example in a case of a plate defining a plurality of secondary conductors.

Preferably, the plates are solid copper plates.

Preferably, each of the secondary conductors is defined as a portion of the at least one plate adjacent to, and especially at least partially surrounding, one respective leg portion of the at least one magnetic core component.

In particular, the portions of the at least one plate are differentiated as different secondary conductors depending on being nearer or more adjacent to a certain leg portion. For example, if a part (or the entirety) of the at least one plate is disposed, as an example, between two leg portions, then a middle line of that part of the plate may separate said part into one first portion being a first secondary conductor and one second portion being a second secondary conductor, wherein the middle line is defined as the middle of the part of the plate directly between the two leg portions (i.e. along shortest distance between the two leg portions).

Preferably, depending especially on direction of induced magnetic flux in the respective leg portions, a current induced in the secondary conductors, as adjacent portions of the at least one plate, may differ between the secondary conductors, especially in direction.

The secondary conductors respectively surround one leg portion at least partially. Preferably therein, the secondary conductors each surround one leg portion only partially. In other words, each of the secondary conductors is disposed so as to surround one leg portion, respectively only partially, i.e. not completely. Herein, the term "to surround" essentially means to extend along a circumference of the leg portion.

Preferably, the term "partially surrounding" refers to the conductor being disposed adjacent to the leg portion, especially with a curvature or shape corresponding to that of an adjacent surface of the leg portion, without being completely wound around said leg portion. In particular therein, the respective conductor induces a magnetic flux within the respective leg portion and/or the magnetic flux within the respective leg portion induces a current or voltage in the respective conductor. The aforementioned inductions of magnetic flux and/or current refer to substantial inductions, i.e. particularly those geared towards the fundamental function of the transformer, as opposed to, for example, stray fields which do not participate in current transformation directly.

Preferably, in the case of the portions of the plate respectively defining the secondary conductors, a point on the plate is defined as the star point of the secondary side.

In some preferable embodiments, a geometric center of the at least one plate corresponds to the star point of the secondary conductors. Therein, the geometric center of the at least one plate is disposed geometrically in the position within the imaginary boundary defined by outer boundaries of the at least one magnetic core component and/or of the primary conductors.

Advantageously, a geometric center of the at least one plate corresponds, with respect to the plane perpendicular to the leg extension direction, to a geometric center of the at least one magnetic core component and/or of the primary conductors, especially to a geometric center of the at least one body portion of the at least one magnetic core component.

Advantageously, the at least one plate is star-shaped. Herein, the term "star-shaped" refers to a shape such as an asterisk or a three-pointed star or a cross or a plus or an x, etc. Preferably, when referring to the shape of a plate, the shape of the plate along its width and height are meant, particularly not its thickness. In particular, the shape of the plate in a plane perpendicular to the leg extension direction is meant.

Preferably, each star-shaped plate comprises a middle portion and a plurality of extension portions, wherein the extension portions extend from the middle portion. Therein, the star point of the secondary conductors is in the middle portion.

Preferably, the star-shape is symmetrical with respect to the extension portions. For example, a symmetrical three-pointed star shape or an x or a plus are examples of symmetrical star-shapes. Preferably, the star-shape is point-symmetrical with respect to its geometric center.

Preferably, the middle portion and the plurality of extension portions are formed integrally with one another.

Advantageously, the geometric center of the star-shaped plate corresponds, especially within the aforementioned margin of error, to the aforementioned central position of the transformer between the leg portions.

Preferably, the transformer comprises a plurality of the star-shaped plates, wherein the extension portions of the star-shaped plates are connected to one another via at least one plate-shaped connecting conductor. Preferably, each of the connecting conductors extends along the leg extension direction.

Advantageously, the at least one plate-shaped connecting conductor is formed integrally with at least one extension portion of at least one of the star-shaped plates. In particular, the at least one plate-shaped connecting conductor is preferably formed by bending the extension portion of the star-shaped plate.

In some embodiments, the star point of the secondary conductors is, at least geometrically, not at a central position of the transformer along the leg extension direction. In particular, the star point is preferably not within one of the aforementioned margin of error values with respect to the central position of the transformer along the leg extension direction. For example, the star point is not within 10% of the central position of the transformer along the leg extension direction.

Advantageously, the primary conductors are wires. In particular, the primary conductors are wires which are respectively wound completely around one leg portion. In other words, one primary conductor is wound completely around one leg portion, wherein another primary conductor is wound completely around another leg portion, etc. Each of the primary conductors preferably comprises a number of turns greater than one, corresponding to a predetermined conversion ratio of the transformer. The primary conductors as wires may also be referred to as primary windings.

In some embodiments, the primary conductors and the secondary conductors are stacked alternatingly. In other words, along the leg extension direction (stacking direction) of one leg portion, the primary conductors and the secondary conductor(s) are stacked such that at least one secondary conductor is sandwiched by two primary conductors and/or vice versa.

Advantageously, each of the plurality of primary conductors (around each leg portion respectively) includes, along the leg extension direction of the respective leg portion, a plurality of primary conductor portions each comprising at least one turn around the respective leg portion. Therein, at least two said primary conductor portions sandwich a secondary conductor.

Advantageously, the primary conductor portions and the secondary conductors are stacked alternatingly.

In some advantageous embodiments, the transformer comprises a plurality of plates, especially a plurality of the star-shaped plates, constituting the secondary conductors. Therein, preferably, the plurality of star-shaped plates are connected to one another electrically.

Preferably, the primary conductor portions and the plurality of plates constituting the secondary conductors are stacked alternatingly.

Preferably, the number of leg portions corresponds to the number of phases of the multi-phase transformer.

For example, in a preferable case, the multi-phase transformer is a three-phase transformer. Therein, said transformer preferably comprises three primary conductors. The number of turns of primary conductors is especially adapted to a predetermined turn ratio of the transformer.

Therein, the at least one magnetic core preferably comprises three leg portions. The three leg portions are arranged, in plan view along their extension direction, in a triangular arrangement. In other words, connecting middle points of their cross sections with imaginary lines forms a triangle. In such a case, the central position thereof is defined preferably as explained above with regard to the triangle (three imaginary lines and their projected centers/middles).

The aforementioned plan view along the extension direction of the leg portions is preferably defined as a plan view perpendicular on (i.e. a view onto) cross sections in a plane perpendicular to the leg extension direction. Preferably, said plan view is defined as a plan view perpendicular on (i.e. a view onto) the substantial dimensions (length and width) of the preferably plate-shaped secondary conductors.

In an advantageous embodiment, the at least one star-shaped plate comprises a triangular middle portion and three extension portions each arranged between two adjacent leg portions of the at least one magnetic core component.

Therein, the secondary conductors are preferably defined as follows. Each secondary conductor comprises a portion, specifically a half, of two extension portions arranged adjacent to one particular leg portion of the at least one magnetic core component, as well as a portion, specifically a third, of the middle portion adjacent to that particular leg portion. Therefore, in total, each star-shaped plate defines three secondary conductors.

In other words, each extension portion, being arranged between two adjacent leg portions, is part of a first secondary conductor (with and) adjacent to the first of the two leg portions and a second secondary conductor (with and) adjacent to the second of the two adjacent leg portions.

Preferably, extension portions of the at least one star-shaped plate extend in plan view perpendicular to the leg extension direction to between the leg portions, especially to respectively between two leg portions. In other words, one extension portion extends to between two adjacent leg portions, whereas another extension portion extends to between two other adjacent leg portions, etc.

Preferably, the primary conductors are connected in an electrical delta configuration. Thereby, winding lengths of the primary conductors are also advantageously reduced.

The aforementioned advantageous embodiments, especially concerning configurations of the secondary conductors, have the foregoing described advantages of providing secondary winding lengths (length of secondary conductors) which are reduced, thereby reducing winding losses. Furthermore, the use of bulky and lossy resonant inductors may be avoided partially or completely. Thereby, maximum power delivery and efficiency can be advantageously increased.

The present invention also concerns an LLC resonant converter. The LLC resonant converter comprises the multi-phase transformer according to any one of the foregoing claims. Thereby, an LLC resonant converter is provided with the foregoing described advantages of reduced winding losses and in particular high maximum power delivery and efficiency.

In particular, the LLC resonant converter is a three-phase LLC converter comprising the three-phase transformer according to the foregoing described embodiments.

Further details, advantages, and features of the preferred embodiments of the present invention are described in detail with reference to the figures. Therein:
Fig. 1 shows a schematic plan view of a multi-phase transformer according to a first embodiment of the present invention;
Fig. 2 shows a schematic cross-sectional side view along a line X-X' of the multi-phase transformer shown in Fig. 1;
Fig. 3 shows a simplified schematic plan view of the multi-phase transformer according to the first embodiment of the present invention;
Fig. 4 shows a reluctance model diagram of the multi-phase transformer according to the first embodiment;
Fig. 5 shows a schematic cross-sectional side of a multi-phase transformer according to a second embodiment of the present invention; and
Fig. 6 shows a circuit diagram of an LLC resonant converter comprising the multi-phase transformer according to the present invention.

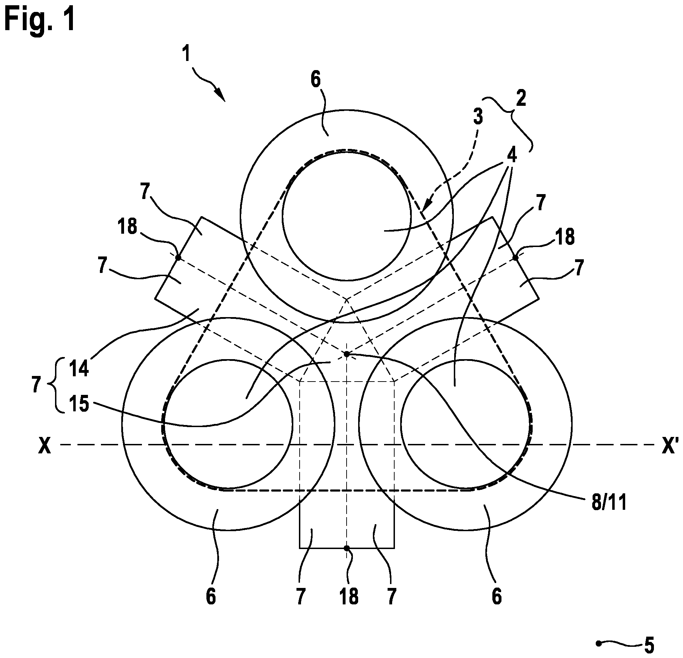

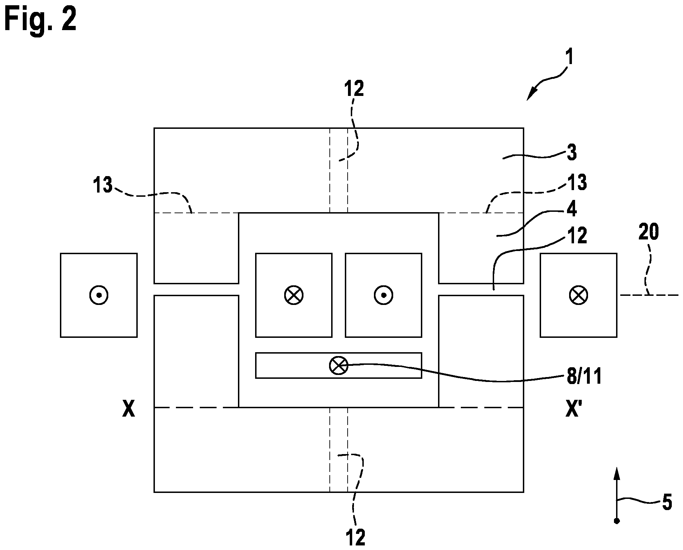

Fig. 1 shows a schematic plan view of a multi-phase transformer 1 according to a first embodiment of the present invention. Fig. 2 shows a schematic cross-sectional side view along a line X-X' of the multi-phase transformer 1 shown in Fig. 1.

With reference to Figs. 1 and 2, the multi-phase transformer 1 (henceforth: "the transformer 1") comprises a plurality, especially two, magnetic core components 2. Each of the magnetic core components 2 comprises a body portion 3 and three leg portions 4 extending therefrom along a leg extension direction 5. The number of leg portions 4 is, however, not limited to three. Instead, the number of leg portions 4 corresponds especially to the number of phases of the transformer 1. Preferably, the present transformer 1 is a three-phase transformer, and thus comprises three leg portions 4. As can be taken from Fig. 2, the two magnetic core components 2 are disposed so as to oppose one another with respect to their leg portions 4.

The body portion 3 is substantially plate-shaped with the leg portions 4 extending therefrom. Dashed lines 13 denote imaginary lines separating the body portion 3 and the leg portions 4. In the present embodiment, the body portion 3 and the leg portions 4 are formed integrally with one another.

An air gap 12 is formed between adjacent leg portions 4 of the separate magnetic core components 2. Further or alternative air gaps 12, denoted by dashed lines, may be provided.

As can be seen in Fig. 1, the leg portions 4 are in a triangular arrangement. Thus, the body portion 3, as is especially apparent from the dashed line in Fig. 1, connecting the leg portions 4 comprises a triangular shape. Each of the leg portions 4 has a circular cross-section. Alternatively, their cross-sections may be rectangular, especially square, or oval.

The transformer 1 comprises a plurality of primary conductors 6. Herein, the transformer 1 comprises three primary conductors 6. The primary conductors 6 of the present embodiment are wires, which may also be referred to as primary windings. Each of the primary conductors 6 is wound around, especially wound completely around, one leg portion 4.

Furthermore, the transformer 1 comprises a plurality of secondary conductors 7. Herein, the secondary conductors 7 are formed from a single plate, especially made of copper. As is apparent from Fig. 1, the plate forming the secondary conductors 7 is star-shaped and partially surrounds inner circumferences of each leg portion 4.

Therefore, the star-shaped plate shown in Figs. 1 and 2 constitutes three secondary conductors 7, which will now be explained.

The star-shaped plate of the secondary conductors 7 is defined by a triangular middle portion 15 and extension portions 14 (see dashed lines in Fig. 1) extending therefrom, thus defining a star-shape. The number of extension portions 14 is not limited to three and, in other embodiments, may correspond to the number of leg portions 4 and in particular the number of phases of the transformer 1. Furthermore, the configuration of Fig. 1 shows the star-shaped plate 14, 15 as having cornered edges, especially between the extension portions 14 and the middle portion 15, i.e. the connecting region of these. In alternative modifications, these connecting regions may be curved, especially concave, so as to advantageously accommodate the circular shape of the leg portions 4.

Each secondary conductor 7 is defined by portions 14, 15 of the plate adjacent to one leg portion 4 of the magnetic core component 2. In other words, the leg portions 4 define the secondary conductors 7. Thus, each secondary conductor 7 comprises one-half each of two extension portions 14 and one-third of the middle portion 15 of the star-shaped plate 14, 15. In total, there are thus three secondary conductors 7 defined.

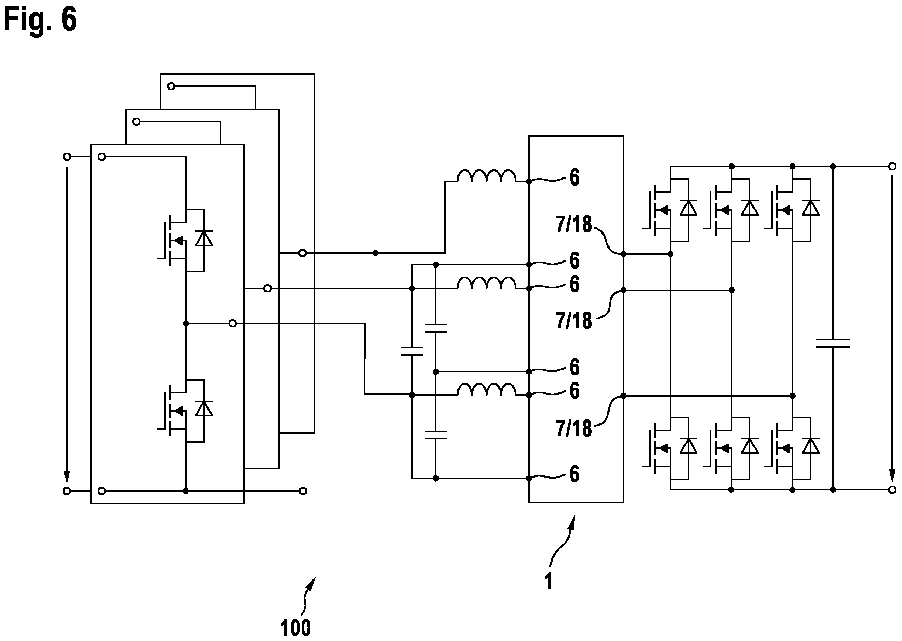

Each end of the extension portions 14 opposite the middle portion 15 comprises a secondary connection point 18 which is connected electrically to the outside. As will be apparent from Fig. 6, the secondary connection point 18 is connected to, for instance, one rectifier leg. Especially since the secondary conductors 7 are connected by the common middle portion 15, these constitute an electrical star configuration.

Furthermore, each of the secondary conductors 7 is disposed, in a plane perpendicular to the leg extension direction 5, between the leg portions 4 and surrounds each of the leg portions 4 (its respective leg portion 4) only partially. In particular, each of the secondary conductors 7 comprises less than one turn around the respective leg portion 4.

Due to the secondary conductors 7 being portions of a single conductor in the present embodiment, i.e. portions of the single star-shaped plate 14, 15, these may also be referred alternatively to "secondary conductor portions".

In other words, a portion of the star-shaped plate 14, 15 in which a current is induced by one leg portion 4 corresponds to one secondary conductor 7. Further, another portion thereof in which current is induced by a different leg portion 4 corresponds to a second secondary conductor 7, etc.

Alternatively, the extension portions 14 may be configured so as to wrap completely around the respective leg portion 4, such that the secondary conductors surround the leg portions 4 completely. However, in such a case, the extension portions 14 do not contact the middle portion 14 (with their ends comprising the connection points 18). For example, they may spiral around the leg portions 4. Thereby, the extension portions 14 may define multiple turns of secondary conductors 7 without causing a short.

As can be taken from Fig. 2, the primary conductors 6 and the secondary conductors 7 are stacked along the leg extension direction 5 alternatingly.

The electrical connection configuration of the transformer 1 is shown in Fig. 6, along with optional components of an LLC converter 100 comprising the transformer 1, and will be discussed below. As can be taken therefrom, the secondary conductors 7 are interconnected in an electrical star configuration. Furthermore, the primary conductors 6 are connected in an electrical delta configuration.

In the present invention, a star point 8 of the secondary conductors 7 is disposed geometrically within outer boundaries of the magnetic core component 2 and/or the primary conductors 6. This reduces winding length and losses associated therewith. Furthermore, the shown (Fig. 1) structure of secondary conductors 7 causes a stray magnetic field, which can replace otherwise bulky and lossy resonant inductors from known transformers. Generally, the star point 8 of star connected conductors 7 is defined as the common point to which all conductors are connected (also commonly referred to as "neutral point").

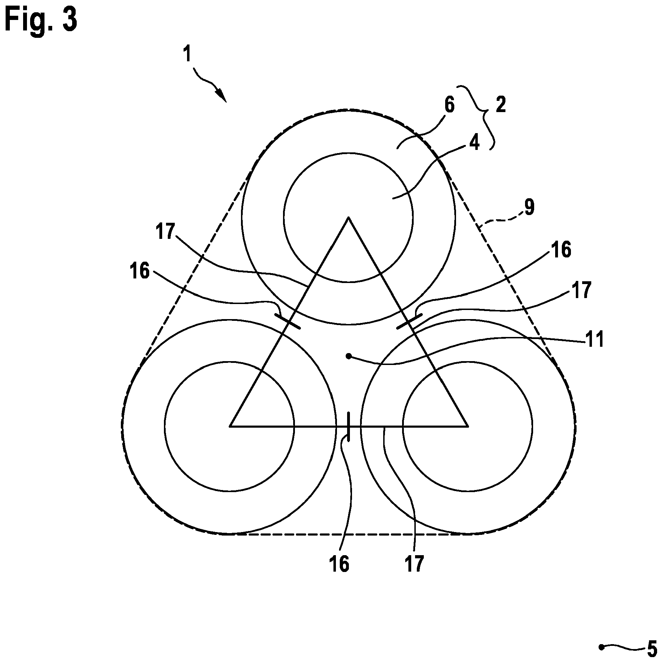

The disposition of the star point 8 of the secondary conductors 7 will be described with reference to Figs. 1 and 3.

Fig. 3 shows simplified schematic plan view of the multi-phase transformer 1 according to the first embodiment of the present invention. In particular, Fig. 3 does not show the body portion 3 of the magnetic core component 2, and also does not show the secondary conductors 7 for the ease of explanation of disposition of the star point 8 and of the secondary conductors 7.

As explained above, the star point 8 of the secondary conductors 7 is disposed geometrically within outer boundaries of the magnetic core component 2 and/or the primary conductors 6. In this embodiment, as the primary conductors 6 comprise the outermost boundaries of the magnetic core component 2 and the primary conductors 6, the outer boundaries are defined by an imaginary boundary 9 encompassing the primary conductors 6.

In particular, the imaginary boundary 9 is formed by following outer surfaces of the primary conductors 6 and interconnecting these (imaginary interconnection) via shortest distances (straight imaginary lines). Therefore, the star point 8 may be disposed anywhere within the outer boundary, defined by the shown imaginary boundary 9.

In the present embodiment, as a special example of being disposed within the outer boundary, as shown in Fig. 1, the star point 8 of the secondary conductors 7 corresponds, due to the symmetrical star-shaped plate 14, 15, to the geometric center of the star-shaped plate 14, 15. In the present embodiment, the star point 8 of the secondary conductors 7 is disposed so as to be at a central position 11 of the transformer 1 between the leg portions 4. In other words, in the present embodiment, the star point 8 coincides with a geometric center of the leg portions 4 and/or the primary conductors 6. This will now be explained, again with reference to Fig. 3.

As can be taken therefrom, the central position 11 is defined by respective middle points 16 of all imaginary lines 17 spanning shortest distances between the separate leg portions 4 of the at least one magnetic core component 2. Projecting all middle points 16 to a common point leads to the central position 11. In the present embodiment with three leg portions 4, a middle point 16 is defined between a first and a second leg portion 4 (for instance, top and right), another middle point 16 is defined between the second leg portion 4 and a third leg portion 4 (right and left), and another middle point 16 is defined between the first leg portion 4 and the third leg portion 4 (top and left). The central position 11 is then a combined projection of the aforementioned middle points 16, for instance the center of a triangle defined by the three imaginary lines 17 spanning between the three leg portions 4.

Alternatively, the central position 11 may be defined by at least one imaginary line 17, for instance one or two or (in cases with more than three leg portions 4) four or more. The central position 11 is thus obtained by defining middle points 16 between the leg portions 4 and projecting these middle points 16 to a common center.

Generally, the central position 11 may be defined with a margin of error. The margin of error may be defined as 20 %, preferably 10 %, more preferably 5 % or 2% or less, of the distance between the leg portions 4, i.e. a length of the aforementioned one or more imaginary lines 17.

So far, with respect to Figs. 1 and 3, the positioning of the star point 8 has been explained with respect to a plan view of the transformer 1. As shown in Fig. 2, the star point 8 is within the outer boundaries of the transformer 1 also in cross-sectional or side view, perpendicular to the plan view. As is apparent therefrom, the star point 8 is not necessarily at a central portion 20 of the transformer 1 in side view, i.e. a central portion 20 thereof with respect to a height of the transformer 1. However, embodiments of the invention exist in which the star point 8 is additionally or alternatively also at a central portion 20 of the transformer 1 with respect to a height of the transformer 1, specifically with respect to a height of the leg portions 4. Herein, the term "height" refers to dimensions along the leg extension direction 5. In other words, in the present embodiment, the star point 8 of secondary conductors 7 is not at a central position 20 of the transformer 1 along the leg extension direction 5.

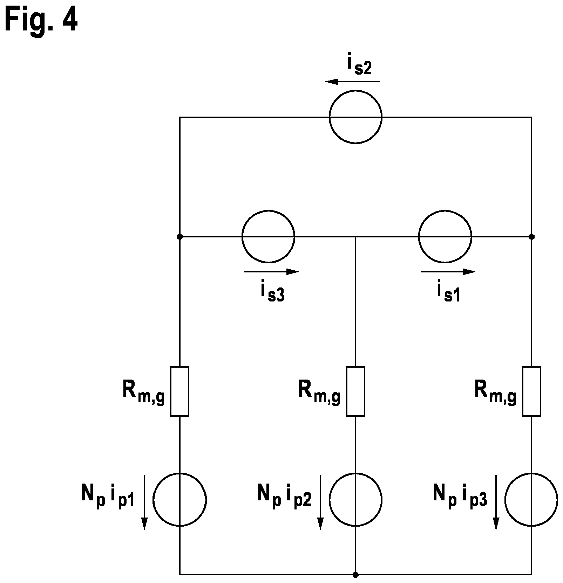

Fig. 4 shows a reluctance model diagram of the multi-phase transformer 1 according to the first embodiment. The shown reluctance model diagram provides an easy explanation of the electromagnetic properties of the transformer 1 shown in Figs. 1 and 2.

Therein, "iₛ₁", "iₛ₂", and "iₛ₃" denote secondary current flowing through respective first ("iₛ₁") to third ("iₛ₃") secondary conductors 7. "R_{m,g}" denotes magnetic reluctance of each leg portion 4. "Nₚiₚ₁", "Nₚiₚ₂", and "Nₚiₚ₃" denote respectively primary current flowing through respective first ("Nₚiₚ₁") to third ("Nₚiₚ₃") primary conductors 6 with turn number "Nₚ".

As can be taken from the reluctance model shown in Fig. 4, the transformer 1 consists of a magnetic star-delta transformer.

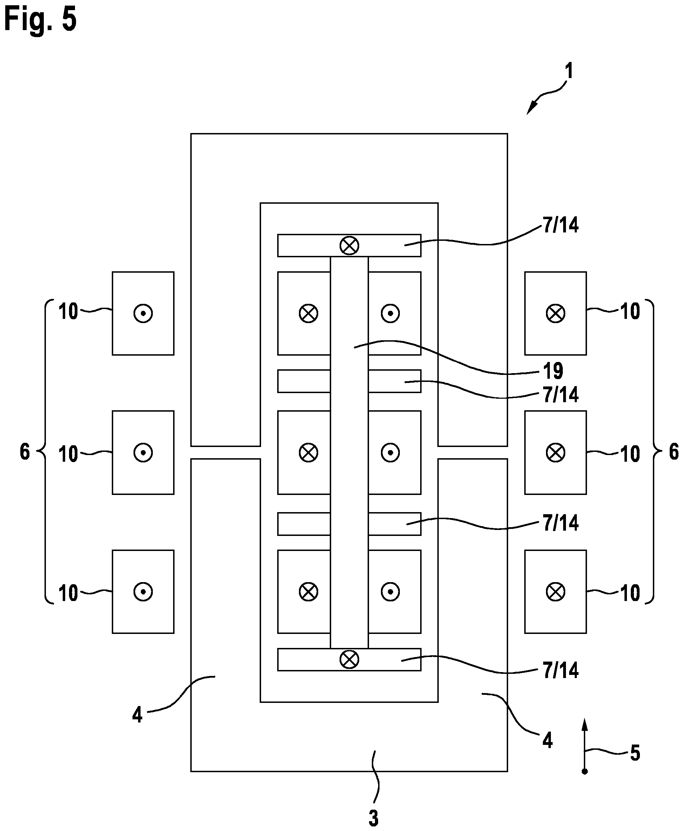

Fig. 5 shows a schematic cross-sectional side of a multi-phase transformer 1 according to a second embodiment of the present invention.

Herein, the transformer 1 comprises the same number of primary conductors 6 as embodiment one. However, each of the primary conductors 6 comprises a plurality of primary conductor portions 10. In other words, each primary conductor 6 of each respective leg portion 4 comprises, along the leg extension direction 5, the plurality of primary conductor portions 10, each having at least one turn. Therefore, in total, the transformer 1 comprises nine primary conductor portions 10 (three for each of the three primary conductors 6, i.e. for each of the three leg portions 4). Six of them are shown in Fig. 5.

In particular, the primary conductor portions 10 of one primary conductor 6, i.e. of one leg portion 4, are connected to one another electrically so as to together define one primary conductor 6 (one primary side winding).

Furthermore, the transformer 1 comprises a plurality of the star-shaped plates 14, 15 (shown in Fig. 1). The star-shaped plates 14, 15 are stacked alternatingly with the primary conductor portions 10. In Fig. 5, due to the cross-sectional side view, only one extension portion 14 of the respective plates 14, 15 is respectively shown. These extension portions 14, especially their secondary connection points 18 (compare Fig. 1), are connected to one another via a connecting conductor 19. In the present embodiment, the connecting conductor 19 is also plate-shaped. Although not shown due to the cross-sectional side view, the transformer 1 comprises three such connecting conductors 19, that is one for each set of extension portions 14.

Therein, the connecting conductor 19 preferably only connects extension portions 14 overlapping one another in plan view. In other words, in view of Fig. 1, one connecting conductor 19 connects all top right extension portions 14, a further connecting conductor 19 connects all top left extension portions 14, and one further connecting conductor 19 connects all bottom center extension portions 14 of all star-shaped plates 14, 15. Therefore, in the present embodiment, the transformer 1 comprises three such connecting conductors 19 shown in Fig. 5. The connecting conductors 19 are especially bus bars.

Preferably, the connecting conductor 19 is formed by extending and bending the extension portions 14 and connecting these to one another. For example, the connecting conductor 19 is formed integrally with one extension portion 14 and connected to at least one other extension portion 14 of another star-shaped plate 14, 15. In the case of each extension portion 14 being bent so as to define one connecting conductor 19 connected to the next star-shaped plate 14, 15 along the leg extension direction 5 (stacking direction), the transformer 1 of the present embodiment comprises three such connecting conductors 19 for each (shown) side-view, in total nine connecting conductors 19. Therein, an extension portion 14 of the top star-shaped plate 14, 15 is bent downward (opposite shown leg extension direction 5) and connected to the extension portion 14 of the second to top star-shaped plate 14, 15 and so on. Such a connecting conductor 19 can also preferably extend, along or opposite the shown leg extension direction 5, over multiple star-shaped plates 14, 15 for interconnecting these.

Thereby, a number of secondary conductor 7 turns can be advantageously increased by increasing the number of star-shaped plates 14, 15, especially depending on a predetermined advantageous turn ratio of the transformer 1.

The present invention also concerns an LLC resonant converter 100. Fig. 6 shows a circuit diagram of an LLC resonant converter 100 comprising the multi-phase transformer 1 according to the present invention.

The LLC resonant converter 100 (henceforth: "the converter 100") comprises the multi-phase transformer 1 according to the foregoing embodiments. As can be taken from Fig. 6, the primary conductors 6 are connected in a delta configuration. Furthermore, the secondary conductors 7 are connected, at their secondary connection point 18, in a star configuration.

In the present embodiment, the converter 100 is a three-phase converter.

Especially since the star point 8 of the secondary side is disposed within the transformer 1, i.e. within the imaginary boundary 9 defined by outer boundaries of the at least one magnetic core component 2 and/or of the primary conductors 6, as demonstrated for example in Fig. 1, winding lengths of the secondary side can be reduced. Furthermore, the secondary conductors 7 generate an integrated stray field, which is used as a resonant inductance of the converter 100. Therefore, the converter 100, specifically a resonant tank thereof, does not require a discrete or separate resonant inductor for increasing a power density of the system.

In addition to the foregoing written explanations, it is explicitly referred to figures 1 to 6, wherein the figures in detail show circuit diagrams and configuration examples of the invention.

### List of Reference Numerals

- 1: Multi-phase transformer
- 2: magnetic core component
- 3: body portion
- 4: leg portion
- 5: leg extension direction
- 6: primary conductor
- 7: secondary conductor
- 8: star point
- 9: imaginary boundary
- 10: conductor portion
- 11: central position
- 12: air gap
- 13: dashed lines
- 14: extension portion
- 15: middle portion
- 16: middle point
- 17: imaginary lines
- 18: secondary connection point
- 19: connecting conductor
- 20: central position (leg extension direction)
- 100: LLC resonant converter

## Claims

1. Multi-phase transformer (1), comprising:
• at least one magnetic core component (2) comprising a body portion (3) and a plurality of leg portions (4) extending along a leg extension direction (5) from the body portion (3);
• a primary side with a plurality of primary conductors (6), wherein each of the primary conductors (6) is respectively wound around one leg portion (4); and
• a secondary side with a plurality of secondary conductors (7) respectively at least partially surrounding one leg portion (4), the secondary conductors (7) being interconnected in an electrical star configuration; wherein
• the primary conductors (6) and the secondary conductors (7) are stacked along the leg extension direction (5), and
• a star point (8) of the secondary side is disposed, at least geometrically, in a position within an imaginary boundary (9) defined by outer boundaries of the at least one magnetic core component (2) and/or of the primary conductors (6).

2. Multi-phase transformer (1) according to claim 1, wherein the star point (8) of the secondary conductors (7) is, at least geometrically, at a central position (11) of the transformer (1) between the leg portions (4).

3. Multi-phase transformer (1) according to any one of the foregoing claims, wherein the secondary side comprises at least one plate (14, 15), wherein portions of the plate (14, 15) respectively define the secondary conductors (7).

4. Multi-phase transformer (1) according to claim 3, wherein each of the secondary conductors (7) is defined as a portion of the at least one plate (14, 15) adjacent to one respective leg portion (4) of the at least one magnetic core component (2).

5. Multi-phase transformer (1) according to claim 3 or claim 4, wherein a geometric center of the at least one plate (14, 15) corresponds to the star point (8) of the secondary conductors (7).

6. Multi-phase transformer (1) according to any one of claims 3 to 5, wherein the at least one plate (14, 15) is star-shaped.

7. Multi-phase transformer according to claim 6, wherein each star-shaped plate (14, 15) comprises a middle portion (15) and a plurality of extension portions (14), the extension portions (14) extending from the middle portion (15), and wherein the star point (8) of the secondary conductors (7) is in the middle portion (15).

8. Multi-phase transformer (1) according to any one of the foregoing claims, wherein the primary conductors (6) are wires.

9. Multi-phase transformer (1) according to any one of the foregoing claims, wherein the primary conductors (6) and the secondary conductors (7) are stacked alternatingly.

10. Multi-phase transformer (1) according to claim 9, wherein each of the plurality of primary conductors (6) includes, along the leg extension direction (5) of the respective leg portion (4), a plurality of primary conductor portions (10) each comprising at least one turn around the respective leg portion (4), and wherein at least two said primary conductor portions (10) sandwich a secondary conductor (7).

11. Multi-phase transformer (1) according to any one of the foregoing claims, wherein the multi-phase transformer (1) comprises three phases.

12. Multi-phase transformer (1) according to claim 11, wherein the at least one magnetic core component (2) comprises three leg portions (4) and the three leg portions (4) are arranged, in plan view along their extension direction (5), in a triangular arrangement.

13. Multi-phase transformer (1) according to claim 12 with claim 7, wherein the star-shaped plate (14, 15) comprises a triangular middle portion (15) and three extension portions (14), the extension portions (14) each being arranged between two adjacent leg portions (4).

14. Multi-phase transformer (1) according to any one of the foregoing claims, wherein the primary conductors (6) are connected in an electrical delta configuration.

15. LLC resonant converter (100), comprising the multi-phase transformer (1) according to any one of the foregoing claims.
